# EUROPÄISCHE PATENTSCHRIFT

(11) **EP 1 240 233 B1**
(45) Veröffentlichungstag und Bekanntmachung des Hinweises auf die Patenterteilung: **12.12.2007**
(21) Anmeldenummer: 00974445.9
(22) Anmeldetag: 24.10.2000
(51) Int. Cl.: C08G 64/30

(54) **FESTE PARTIKEL**
SOLID PARTICLES
PARTICULES SOLIDES

(30) Priorität: 05.11.1999 DE 19953301
(43) Veröffentlichungstag der Anmeldung: 18.09.2002
(73) Patentinhaber: Bayer MaterialScience AG, 51368 Leverkusen (DE)
(72) Erfinder: LANZE, Rolf, 47804 Krefeld (DE); PREIN, Michael, B-2930 Brasschaat (BE); HUCKS, Uwe, 46519 Alpen (DE)
(86) Internationale Anmeldenummer: PCT/EP2000/010470
(87) Internationale Veröffentlichungsnummer: WO 2001/032748

(56) Entgegenhaltungen:
- DE-A- 2 439 552

## Beschreibung

Die vorliegende Erfindung betrifft feste Partikel, die Dihydroxyverbindungen und Kohlensäureester enthalten, sowie ein Verfahren zu deren Herstellung, sowie eine Vorrichtung zu deren Herstellung, sowie deren Verwendung zur Herstellung von Polycarbonat nach dem Umesterungsverfahren, sowie ein Verfahren zur Herstellung von Polycarbonat nach dem Umesterungsverfahren.

Die Herstellung von Polycarbonat durch Umesterung von Kohlensäureestern mit Dihydroxyverbindungen ist bekannt. Das Verfahren ist beispielsweise beschrieben in der Monographie von H. Schnell, Chemistry and Physics of Polycarbonate, Polymer Reviews, Volume 9, John Wiley and Sons, 1964, Seite 44-51. Das Verfahren ist auch beschrieben in Encyclopedia of Polymer Sience, Volume 10, 1969.

Das Verfahren zur Herstellung von Polycarbonat durch Umesterung ist insbesondere geeignet, um das Homopolycarbonat von Bisphenol A herzustellen. Hierzu wird Bisphenol A mit Kohlensäureestern, bevorzugt Diphenylcarbonat, umgeestert. Das Verfahren zur Herstellung von Polycarbonat durch Umesterung ist auch geeignet, um Copolycarbonate auf der Basis von Bisphenol A und weiteren Dihydroxyverbindungen als Copolymerisationspartner herzustellen. Hierzu werden Bisphenol A und die weiteren Dihydroxyverbindungen mit Kohlensäureestern, bevorzugt Diphenylcarbonat, umgeestert.

Bei der Herstellung von Polycarbonat durch Umesterung werden die Reaktionspartner (Dihydroxyverbindungen und Kohlensäureester und gegebenenfalls weitere Hilfs- und Zusatzstoffe wie z.B. Verzweiger) in einer mehrstufigen Reaktion bevorzugt in der Schmelze, bevorzugt unter Zusetzung eines Umesterungskatalysators oder einer Kombination von mehreren Umesterungskatalysatoren unter Abspaltung einer Hydroxyverbindung aus dem Kohlensäureester umgesetzt. Falls als Kohlensäureester Diphenylcarbonat eingesetzt wird, wird als Hydroxyverbindung Phenol abgespalten. Durch Variation von Temperatur und Druck über der Reaktionsmischung wird das Reaktionsgleichgewicht stetig verschoben. Durch fortgesetzte Aufkondensation können auf diesem Wege farbhelle, lösungsmittelfreie Polycarbonate erhalten werden können.

Für das Umesterungsverfahren zur Herstellung von Polycarbonaten ist eine Vielzahl von Katalysatoren, Ausführungsformen des Verfahrens und eingesetzten Apparaten beschrieben.

Das Umesterungsverfahren zur Herstellung von Polycarbonaten hat den Vorteil, dass keine Lösungsmittel und kein Phosgen erforderlich sind, wie dies im sogenannten Phasengrenzflächeverfahren zur Herstellung von Polycarbonaten erforderlich ist. Damit ermöglicht das Umesterungsverfahren zur Herstellung von Polycarbonaten eine kostengünstige und umweltfreundliche Herstellung von Polycarbonat, das zudem den Vorteil hat, frei von Chlor zu sein.

Das Verfahren zur Herstellung von Polycarbonat durch Umesterung stellt im allgemeinen hohe Anforderungen an die Reinheit der Ausgangsstoffe und der verwendeten Hilfsstoffe. Auch die spezifische Darreichungsform der Ausgangsstoffe und der Hilfsstoffe, kann das Verfahren und die Qualität des Produktes Polycarbonat beeinflussen.

Die für das Verfahren zur Herstellung von Polycarbonaten durch Umesterung verwendeten Rohstoffe, Dihydroxyverbindungen und Kohlensäureester werden dem Verfahren beispielsweise als getrennte Komponenten zugeführt und z.B. beim Aufschmelzen gemischt. Sie können auch beide als Schmelzen dem Verfahren zugeführt werden, so dass die Schmelzen vor der Reaktion gemischt werden. Derartige Verfahren sind beispielsweise beschrieben in EP-A 0 861 863.

Zur Erleichterung von Abfüllung, Transport und Lagerung können aus einer Schmelze einer Dihydroxyverbindung durch Abkühlung Granulat, Schuppen oder Prills hergestellt werden, wobei Prills aufgrund des geringeren Staubanteils und der besseren Fließeigenschaften Vorteile gegenüber Granulat bzw. Schuppen aufweisen.

Die Herstellung von festen Partikeln, beispielsweise sogenannten Prills, die nur einen Rohstoff für die Herstellung von Polycarbonaten nach dem Umesterungsverfahren enthalten, beispielsweise Bisphenol A, ist bekannt.

Die Herstellung von Prills von Dihydroxyverbindungen, insbesondere von Bisphenol-A-Prills, kann beispielsweise so erfolgen, dass schmelzflüssige Dihydroxyverbindungen, insbesondere schmelzflüssiges Bisphenol-A, am Kopf eines Prillturmes über eine Düsenplatte mit einer Vielzahl von Düsen in einen Prillturm eingetragen werden, in den im Gegenstrom ein im Kreislauf geführtes Kühlgas eingeleitet wird, wobei die auf etwa Raumtemperatur abgekühlten Prills am Fuß des Prillturmes gesammelt und abgezogen werden.

Aus der JP-6-107 581 ist ein Verfahren zur Herstellung von Bisphenol-A-Prills bekannt, bei dem schmelzflüssiges Bisphenol-A im Kopfbereich eines Prillturmes eingetragen wird und im Gegenstrom am Fuße des Prillturmes Kühlgas eingebracht wird, das den herunterfallenden Schmelzetröpfchen die Schmelzwärme entzieht. Am Fuße des Prillturmes werden die verfestigten Prills abgezogen.

Die getrennte Lagerung und der getrennte Transport der beiden Rohstoffe Dihydroxyverbindung und Kohlensäureester für das Verfahren zur Herstellung von Polycarbonat durch Umesterung bedeuten einen hohen logistischen Aufwand. Ebenso ist die getrennte Zuführung der beiden Rohstoffe in das Verfahren zur Herstellung von Polycarbonat durch Umesterung mit einem hohen apparativen Aufwand verbunden.

Der vorliegenden Erfindung lag daher die Aufgabe zugrunde, ein Verfahren zur Herstellung von Polycarbonat durch Umesterung von Dihydroxyverbindungen und Kohlensäureestern zur Verfügung zu stellen, das nicht die Nachteile der aus dem Stand der Technik bekannten Verfahren aufweist, die aus der Verwendung der beiden getrennten Rohstoffe Dihydroxyverbindungen und Kohlensäureester resultieren.

Die erfindungsgemäße Aufgabe wird gelöst durch ein Verfahren zur Herstellung von Polycarbonat durch Umesterung von Dihydroxyverbindungen und Kohlensäureestern, wobei die Dihydroxyverbindungen und die Kohlensäureester dem Verfahren in Form von festen Partikeln zugeführt werden, die sowohl Dihydroxyverbindungen als auch Kohlensäureester enthalten.

Gegenstand der vorliegenden Erfindung ist demgemäß ein Verfahren zur Herstellung von Polycarbonat durch Umesterung von Kohlensäureestern mit Dihydroxyverbindungen, dadurch gekennzeichnet, dass als Rohstoff feste Partikel, die 10 bis 90 Gew.-Teile einer Dihydroxyverbindung und 10 bis 90 Gew.-Teile eines Kohlensäureesters enthalten, eingesetzt werden.

Es ist dabei möglich, dass neben den genannten festen Partikel weitere Rohstoffe für das erfindungsgemäße Verfahren verwendet werden. Dies können auch weitere Dihydroxyverbindungen und/oder Kohlensäureester sein. Bevorzugt ist es, die gesamte benötigte Menge an Kohlensäureester und an Dihydroxyverbindung in Form der erfindungsgemäßen festen Partikel als Rohstoff zuzuführen.

Gegenstand der vorliegenden Erfindung ist weiterhin die Verwendung von festen Partikeln, die 10 bis 90 Gew.-Teile einer Dihydroxyverbindung und 10 bis 90 Gew.-Teile eines Kohlensäureesters enthalten, zur Herstellung von Polycarbonat durch Umesterung von Kohlensäureestern mit Dihydroxyverbindungen.

Gegenstand der vorliegenden Erfindung sind weiterhin feste Partikel, dadurch gekennzeichnet, dass sie 10 bis 90 Gew.-Teile einer Dihydroxyverbindung und 10 bis 90 Gew.-Teile eines Kohlensäureesters enthalten.

Gegenstand der vorliegenden Erfindung ist weiterhin ein Verfahren zur Herstellung fester Partikel, dadurch gekennzeichnet, dass eine Schmelze die 10 bis 90 Gew.-Teile der Dihydroxyverbindung und 10 bis 90 Gew.-Teile des Kohlensäureesters enthält, abgekühlt wird.

Gegenstand der vorliegenden Erfindung ist weiterhin eine Vorrichtung zur Herstellung von festen Partikeln, die 10 bis 90 Gew.-Teile einer Dihydroxyverbindung und 10 bis 90 Gew.-Teile eines Kohlensäureesters enthalten, dadurch gekennzeichnet, dass die Vorrichtung zwei getrennte Zuleitungen für die Schmelze des Kohlensäureesters und für die Schmelze der Dihydroxyverbindung aufweist und dass diese Zuleitungen in zwei getrennte Wärmetauscher münden und dass die Leitungen zum Abtransport des Kohlensäureesters und der Dihydroxyverbindung aus dem jeweiligen Wärmetauscher zur Vereinigung der beiden Stoffströme zusammengeführt werden, und dass die Vorrichtung in der Leitung, die die zusammengeführten Stoffströme aus Kohlensäureester und Dihydroxyverbindung weitertransportiert, ein Mischelement und danach einen Wärmetauscher aufweist und, dass die Vorrichtung einen Prillturm aufweist, der mit dem vereinigten Stoffstrom aus Kohlensäureester und Dihydroxyverbindung der aus dem zuletzt genannten Wärmetauscher stammt, gespeist wird.

Das erfindungsgemäße Verfahren zur Herstellung von Polycarbonat durch Umesterung hat zahlreiche Vorteile. Es erlaubt eine vereinfachte Rohstofflogistik, insbesondere eine vereinfachte Lagerung und einen vereinfachten Transport der Rohstoffe. Die Zuführung der Rohstoffe in das Verfahren ist vereinfacht.

Das erfindungsgemäße Verfahren zur Herstellung von Polycarbonat durch Umesterung unter Verwendung der erfindungsgemäßen festen Partikel als Rohstoff zeichnet sich durch logistische Vorteile auf, wie z.B. einfache Lagerung der Rohstoffe, einfacher Transport der Rohstoffe und einfache Zuführung der Rohstoffe in das Verfahren.

Das erfindungsgemäße Verfahren zur Herstellung von Polycarbonat durch Umesterung unter Verwendung der erfindungsgemäßen festen Partikel als Rohstoff ist weiterhin durch den Vorteil gekennzeichnet, dass eine exakte Einstellung des stöchiometrischen Verhältnisses zwischen Kohlensäureester und Dihydroxyverbindung schon in den Prills möglich ist. Weiterhin hat es den Vorteil, dass aufwendige Apparaturen zum Mischen der Schmelzen bzw. Feststoffe, die aus Dihydroxyverbindung und Kohlensäureester bestehen, im Verfahren zur Herstellung des Polycarbonates entfallen.

Die erfindungsgemäßen festen Partikel aus Dihydroxyverbindungen und Kohlensäureestern haben zahlreiche Vorteile. Sie sind mechanisch stabil. Sie können gelagert werden, ohne dass sie chemisch reagieren oder sich verfärben. Die erfindungsgemäßen festen Partikel zeichnen sich aus durch hohe Farbstabilität und hohe Lagerstabilität sowie durch eine hohe Reinheit.

Das erfindungsgemäße Verfahren zur Herstellung fester Partikel, die Kohlensäureester und Dihydroxyverbindungen enthalten, hat zahlreiche Vorteile. Es liefert auf einfache Weise mechanisch stabile, lagefähige und farbhelle feste Partikel der angegebenen Zusammensetzung. Gegenüber der getrennten Konfektionierung von Kohlensäureester und Dihydroxyverbindung werden weniger Apparaturen benötigt, beispielsweise ein Prillturm statt zwei Prilltürmen.

Die erfindungsgemäße Vorrichtung zur Herstellung fester Partikel die Kohlensäureester und Dihydroxyverbindungen enthalten hat zahlreiche Vorteile.

Beispielsweise gewährleistet die erfindungsgemäße Vorrichtung, dass die Ströme aus Kohlensäureesterschmelze und der Schmelze der Dihydroxyverbindung erst dann vereinigt werden, wenn sie auf eine Temperatur knapp oberhalb ihres jeweiligen Schmelzpunktes abgekühlt wurden. Dies bedeutet eine Vereinigung der beiden Schmelzen auf möglichst niedrigem Temperaturniveau, was wiederum zur Folge hat, dass unerwünschte Nebenreaktionen unterbleiben. Die erfindungsgemäße Vorrichtung gewährleistet weiterhin, dass die so vereinigten Schmelzeströme unmittelbar nach ihrer Vereinigung durchmischt und in einem weiteren Wärmetauscher auf eine Temperatur knapp oberhalb des Schmelzpunktes der Mischung abgekühlt werden. Danach erfolgt unmittelbar die Herstellung der Prills und damit die Abkühlung. Damit gewährleistet die erfindungsgemäße Vorrichtung eine möglichst kurze Verweilzeit der vereinigten Schmelzen auf möglichst tiefem Temperaturniveau. Dadurch werden unerwünschte Nebenreaktionen auf ein Minimum reduziert.

Die erfindungsgemäßen festen Partikel können beliebige Größe und Gestalt haben. Bevorzugt haben sie kugelförmige oder nahezu kugelförmige Gestalt (sogenannte Prills). Sie können jedoch auch die Gestalt von Pulverpartikeln, Schuppen oder sogenannten Pellets haben.

Das erfindungsgemäße Verfahren zur Herstellung fester Partikel die Dihydroxyverbindungen und Kohlensäureester enthalten, ist dadurch gekennzeichnet, dass eine Schmelze, die Dihydroxyverbindungen und Kohlensäureester enthält, abgekühlt und dadurch verfestigt wird. Bevorzugt wird dieses Verfahren als sogenanntes Prillverfahren ausgeführt, d.h. das die Schmelze in der Gasphase dispergiert wird, beispielsweise in Form von kugelförmigen Schmelzepartikeln, die dann in der Gasphase im freien Fall abkühlen und sich verfestigen. Die Verfestigung bedeutet bevorzugt eine Kristallisation. Sie kann jedoch auch im allgemeinen eine Kristallisation oder ein glasartiges Erstarren, das einen amorphen Zusatand der festen Partikel zur Folge hat, bedeuten.

Die geschilderte, bevorzugte erfindungsgemäße Ausführung des Verfahrens zur Herstellung fester Partikel über das Prillverfahren, hat den Vorteil, dass das Prillverfahren eine kurze Verweilzeit der vereinigten Stoffströme aus Dihydroxyverbindung und Kohlensäureester in der Schmelze erlaubt. Dies ist dadurch gewährleistet, dass die vereinigte Schmelze aus Kohlensäureester und Dihydroxyverbindung im Prillverfahren schnell abgekühlt und verfestigt werden kann. Dies hat den Vorteil zur Folge, dass die Einzelkomponenten Kohlensäureester und Dihydroxyverbindungen nicht in der Schmelze miteinander reagieren, so dass keine unerwünschten Nebenprodukte entstehen. Der genannte Vorteil zeichnet das Prillverfahren gegenüber anderen Verfahren zur Verfestigung der Schmelze, beispielsweise Verfahren zur Herstellung von Granulaten oder Schuppen aus.

Demgemäß ist es eine besonders bevorzugte Ausführungsform des erfindungsgemäßen Verfahrens zur Herstellung fester Partikel, wenn das Verfahren als Prillverfahren ausgeführt wird und, wenn das Verfahren nur kurze Verweilzeiten der vereinigten Schmelzen aus Dihydroxyverbindung und Kohlensäureester aufweist, und wenn die vereinigte Schmelze aus Kohlensäureester und Dihydroxyverbindung eine Temperatur aufweist, die nur geringfügig oberhalb des Verfestigungspunktes dieser Schmelze ist.

Die Verweilzeit der vereinigten Schmelzen aus Dihydroxyverbindung und Kohlensäureester ist bevorzugt kleiner als 60 Sekunden, besonders bevorzugt kleiner als 30 Sekunden und ganz besonders bevorzugt kleiner als 10 Sekunden. Die Temperatur der vereinigten Schmelze aus Kohlensäureester und und Dihydroxyverbindung ist bevorzugt weniger als 20°C oberhalb des Verfestigungspunktes dieser Schmelze, sie ist besonders bevorzugt weniger als 5°C oberhalb des Verfestigungspunktes und ganz besonders bevorzugt weniger als 1°C oberhalb des Verfestigungspunktes dieser Schmelze.

Eine besonders bevorzugte Ausführungsform des erfindungsgemäßen Verfahrens ist es demgemäß die getrennten Schmelzen aus Dihydroxyverbindung und Kohlensäureester jeweils separat bei einer Temperatur knapp oberhalb ihres Schmelzpunktes bereitzustellen, sie danach zu mischen, sie danach auf eine Temperatur knapp oberhalb des Verfestigungspunktes der gemischten Schmelze abzukühlen, und sie danach in einem Prillverfahren zu verfestigen, wobei das gesamte Verfahren so geführt wird, dass die Verweilzeit der vereinigten Schmelze aus Kohlensäureester und Dihydroxyverbindung in der flüssigen Phase, d.h. bis zur Verfestigung durch Prillherstellung möglichst gering gehalten wird.

Eine ebenso bevorzugte Ausführungsform des erfindungsgemäßen Verfahrens zur Herstellung der festen Partikel ist die Verfestigung der Schmelze, die Dihydroxyverbindungen und Kohlensäureester enthält, zu Granulaten oder Schuppen nach bekannten Verfahren.

Eine ebenso bevorzugte Ausführungsform des erfindungsgemäßen Verfahrens zur Herstellung der festen Partikel ist die Pelletierung einer Schmelze, die Dihydroxyverbindungen und Kohlensäureester enthält, nach bekannten Pelletierverfahren.

Dihydroxyverbindungen im Sinne der vorliegenden Erfindung sind beliebige Dihydroxyverbindungen, die zur Herstellung von Polycarbonaten geeignet sind.

Beispielsweise sind geeignete Dihydroxyverbindungen:
4,4'Dihydroxydiphenyl,
2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
α,α-Bis-(4-hydroxyphenyl)-m-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α-Bis-(3,5-dimethyl-4-hydroxyphenyl)-p-diisopropylbenzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methylcyclohexan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-1-phenyl-ethan,
2,2-Bis-(3,5-dimethyl-4-hydroxyphenyl)-2-phenyl-ethan,
2,2-Bis-(4-hydroxyphenyl)-2,2-diphenyl-ethan,
9,9-Bis-(4-hydroxyphenyl)-fluoren,
9,9-Bis-(3,5-dimethyl-4-hydroxyphenyl)-fluoren.

Besonders bevorzugte Dihydroxyverbindungen sind:
2,2-Bis-(3,5-dimethyl-4-hydroxyphenyl)-propan,
1,1-Bis-(4-hydroxyphenyl)-cyclohexan,
1,1-Bis-(4-hydroxyphenyl)-1-phenyl-ethan,
1, 1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-4-methylcyclohexan,
9,9-Bis-(3,5-dimethyl-4-hydroxyphenyl)-fluoren.

2,2-Bis-(4-hydroxyphenyl)propan (auch Bisphenol A genannt) ist die erfindungsgemäß besonders bevorzugte Dihydroxyverbindung.

Erfindungsgemäß können beliebige Kohlensäureester eingesetzt werden. Bevorzugt ist Diphenylcarbonat.

Die erfindungsgemäßen festen Partikel enthalten 10 bis 90 Gew.-Teile einer Dihydroxyverbindung und 10 bis 90 Gew.-Teile eines Kohlensäureesters. Bevorzugt enthalten die erfindungsgemäßen festen Partikel 30 bis 80 Gew.-Teile einer Dihydroxyverbindung und 20 bis 70 Gew.Teile eines Kohlensäureesters. Besonders bevorzugt enthalten die erfindungsgemäßen festen Partikel pro Mol Dihydroxyverbindung 0,9 bis 1,2 mol Kohlensäureester. Ganz besonders bevorzugt bestehen die festen Partikel aus 1 mol Dihydroxyverbindung und 1 mol Kohlensäureester ohne das sie weitere Substanzen enthalten. Dabei ist es selbstverständlich dem Fachmann bekannt, dass Verunreinigung in geringfügigen Mengen nach wie vor in den festen Partikeln enthalten sein können. Diese sind somit nicht mit der Formulierung weitere Substanzen gemeint, gemeint ist lediglich, dass nicht weitere Substanzen willentlich in nennenswertem Umfang in den festen Partikel enthalten sind; worunter z.B. Stellmittel, Füllstoffe oder beliebige weitere Substanzen gemeint sein könnten. Unter den zuletzt genannten festen Partikeln sind die jenigen am meisten bevorzugt bei denen die Hydroxyverbindung Bisphenol A ist und der Kohlensäureester Diphenylcarbonat ist.

Das Verfahren zur Herstellung von Polycarbonat durch Umesterung von Dihydroxyverbindungen und Kohlensäureestern erfolgt nach bekannten Verfahrensweisen, wobei im Unterschied zum Stand der Technik als Rohstoff die erfindungsgemäßen festen Partikel, die Dihydroxyverbindungen und Kohlensäureester enthalten, zum Einsatz kommen. Bevorzugt wird dabei die gesamte erforderliche Menge an Dihydroxyverbindungen und Kohlensäureestern in Form der erfindungsgemäßen festen Partikel eingesetzt. Es ist jedoch auch möglich zusätzlich zu den erfindungsgemäßen festen Partikeln Dihydroxyverbindungen und/oder Kohlensäureester in anderer Form, beispielsweise als Schmelze, oder als Lösung, oder als Feststoff, dem Verfahren zuzuführen.

Erfindungsgemäße Polycarbonate die nach dem erfindungsgemäßen Verfahren zur Herstellung von Polycarbonat durch Umesterung hergestellt werden, sind sowohl Homopolycarbonate als auch Copolycarbonate.

Bevorzugte Polycarbonate sind das Bisphenol-A-Homopolycarbonat und Copolycarbonate, die als Dihydroxykomponenten Bisphenol A und 1,1-Bis-(4-hydroxyphenyl)-3,3,5-trimethylcyclohexan enthalten.

Besonders bevorzugt ist das Bisphenol A Homopolycarbonat.

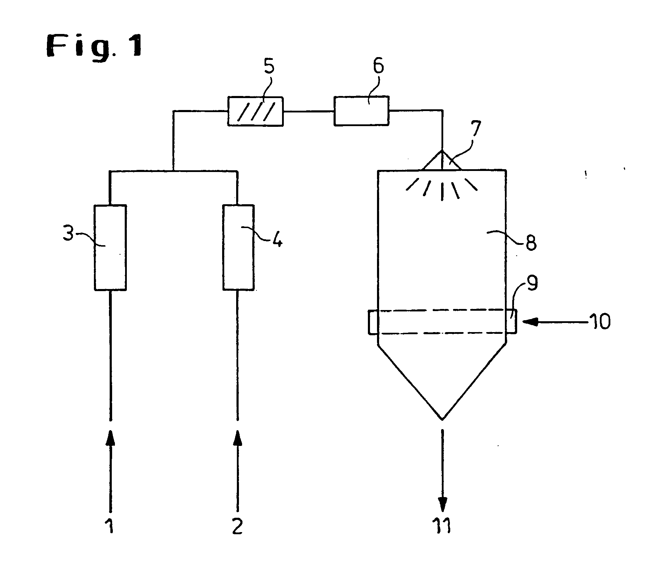

Die erfindungsgemäße Vorrichtung wird nachfolgend anhand einer ein bevorzugtes Ausführungsbeispiel darsstellenden Zeichnung (Fig. 1) näher erläutert.

Figur 1 zeigt eine Vorrichtung die zwei getrennte Zuleitungen 1 und 2 für die getrennten Schmelzeströme aus Kohlensäureester und Dihydroxyverbindung aufweist. Die Zuleitungen führen jeweils in die Wärmetauscher 3 und 4, in denen die getrennten Schmelzen knapp über ihren jeweiligen Verfestigungspunkt abgekühlt werden. Danach werden die Schmelzeströme vereinigt durch einen Mischer 5 geführt und in einem Wärmetauscher 6 auf eine Temperatur knapp oberhalb des Verfestigungspunktes der vereinigten Schmelze aus Kohlensäureester und Dihydroxyverbindung abgekühlt. Danach wird diese Schmelze über eine Düsenplatte 7 in einen Prillturm 8 in Form von Flüssigkeitstropfen eingeführt, wobei diesen Flüssigkeitstropfen Stickstoff 10 entgegenströmt, der über eine Ringdüse 9 am unteren Ende des Prillturms zugeführt wird. Am unteren Ende des Prillturms werden die festen Prills aus Kohlensäureester und Dihydroxyverbindung 11 abgezogen.

### Beispiele

### Beispiel 1

Die folgenden Beispiele zeigen, dass im Hinblick auf einen Einsatz von gemischten Prills aus Dihydroxyverbindungen, insbesondere Bisphenol A (BPA) und Kohlensäureestern, insbesondere Diphenylcarbonat (DPC), als Rohstoff im Verfahren zur Herstellung von Polycarbonat durch Umesterung eine Herstellung von gemischten Prills aus Dihydroxyverbindungen, insbesondere Bisphenol A (BPA) und Kohlensäureestern, insbesondere Diphenylcarbonat (DPC) möglich ist und ob eine Lagerung derartiger Prills über längere Zeit ohne verstärkte Abspaltung einer Hydroxyverbindung, insbesondere Phenol, möglich ist.

Zu diesem Zweck wurde eine 50:50 Gew.-% Mischung aus DPC und BPA durch Aufschmelzen bei 140°C unter Inertgasmosphäre homogenisiert. Anschließend wurden unter Laborbedingungen durch Eintropfen der Schmelze in flüssigen Stickstoff und langsames Aufwärmen auf Raumtemperatur Prills erhalten. Diese Prills wiesen einen Durchmesser von ca. 1 mm bei annähernder Kugelform auf und waren rieselfähig, ein Verkleben der Oberfläche wurde nicht beobachtet.

Der Versuch wurde sowohl ohne Zusatz eines Katalysators (Probe A) als auch in Gegenwart von 500 ppb Natriumphenolat (Zugabe unmittelbar vor dem Eintropfen in flüssigen Stickstoff, Probe B) durchgeführt. Die Zusammensetzung der so erhaltenen Prills wurde unmittelbar nach der Herstellung sowie nach 2 und 4 Wochen Lagerung bei Raumtemperatur unter Luftatmosphäre mitels HPLC bestimmt. Als Vergleichsprobe diente die erstarrte 50:50-Schmelze aus Probe A (ohne Prillung, 0-Probe).

Die Ergebnisse sind in Tabelle 1 zusammengefaßt. Es wurden in allen Proben neben BPA und DPC auch geringe Mengen Phenol und entsprechende Mengen an niedrigen Kondensationsprodukten y1, x1 und n1 gefunden. Die Prills der Probe A wiesen im Rahmen der Messganauigkeit die gleiche Homogenität (BPA/DPC-Verhältnis) und Zusammensetzung auf wie die Nullprobe. Eine Weiterreaktion im Verlauf der Lagerung war nicht zu beobachten, die Kondensation erfolgte also bereits während des Aufschmelzens. In Gegenwart von 0,5 ppm Natriumphenolat war bereits unmittelbar nach der Prillung eine verstärkte Aufkondensation zu beobachten, die sich nach 2 Wochen Lagerung bei ca. 3 % Umsatz stabilisierte. Eine Bildung von Gilb-Komponenten konnte in keiner der Proben nach 4-wöchiger Lagerung festgestellt werden.

**Tabelle 1 Zusammensetzung der BPA/DPC Proben**

| (Alle Angaben in Gew.-%, optimiert auf Detektion der Nebenkomponenten. Zusätzlich wurden jeweils 0,18 % o,p-BPA detektiert.) | | | | | | | |
|---|---|---|---|---|---|---|---|
| Probe | Zeit | BPA | DPC | Phenol | Verbindung y1 | Verbindung x1 | Verbindung n1 |
| 0-Probe | sofort | 49,5 | 49,6 | 0,4 | 0,6 | <0,01 | 0,01 |
| 0-Probe | 14 d | 49,7 | 49,7 | 0,3 | 0,6 | <0,01 | 0,02 |
| 0-Probe | 28 d | 49,7 | 49,3 | 0,3 | 0,6 | <0,01 | 0,02 |
| Probe A | sofort | 49,7 | 49,9 | 0,2 | 0,8 | <0,01 | 0,02 |
| Probe A | 14 d | 49,5 | 49,8 | 0,3 | 0,8 | <0,01 | 0,03 |
| Probe A | 28 d | 49,6 | 49,2 | 0,3 | 0,7 | <0,01 | 0,03 |
| Probe B | sofort | 48,3 | 48,4 | 0,8 | 2,8 | 0,10 | 0,12 |
| Probe B | 14 d | 46,8 | 47,1 | 1,3 | 5,1 | 0,12 | 0,13 |
| Probe B | 28 d | 46,9 | 46,8 | 1,4 | 5,5 | 0,12 | 0,14 |

| | | | | | | | |
|---|---|---|---|---|---|---|---|
| 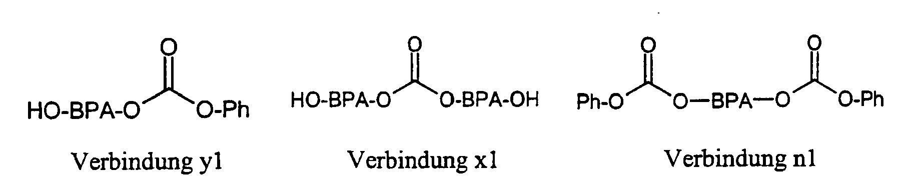 | | | | | | | |

Diese Beispiele zeigen, dass die Herstellung von gemischten Prills aus BPA und DPC möglich ist, die Umsatzraten bei Raumtemperatur in der abgeschreckten Schmelze sind in Abwesenheit katalytisch aktiver Verbindungen sehr gering, eine Farbbildung ist nicht zu beobachten. Es ist günstig, die Verweilzeiten in der Schmelze vor der Prillung gering zu halten und katalytische Verbindungen strikt auszuschließen.

### Beispiel 2 Herstellung von Polycarbonat aus DPC-BPA-Mischprills

**Verwendete Methoden:** Die relative Lösungsviskosität etaᵣₑₗ wurde an einer 5 g Polymer/l enthaltenden Lösung in Dichlormethan bei 25 °C bestimmt.

Der Yellowness-Index YI wurde nach ASTM D 1925, die Transmission nach ASTM D 1003 gemessen.

Eine Mischung aus 22,6 g (53,0 mmol) Diphenylcarbonat und 22,8 g (50,0 mmol) Bisphenol A wurden durch Aufschmelzen bei 140°C unter Stickstoffatmosphäre homogenisiert. Anschließend wurden durch Eintropfen der Schmelze in flüssigen Stickstoff und langsames Aufwärmen auf Raumtemperatur annähernd kugelförmige Prills (Durchmesser ca. 1,0 mm) erhalten. Die Prills waren rieselfähig, ein Verkleben der Oberfläche wurde auch nach Lagerung über 14 Tage bei Raumtemperatur nicht beobachtet.

35 g der so hergestellten Prills wurden in einen 50 ml Dreihalskolben mit Rührer, Innenthermometer und aufgesetzter Vigreuxkolonne mit Destillationsbrücke eingebracht. Die Apparatur wurde durch fünfmaliges Anlegen von Vakuum und anschließendes Spülen mit Stickstoff (99,99 %) von Luftsauerstoff befreit und das Gemisch auf 150°C aufgeheizt. Bei dieser Temperatur waren die BPA-DPC-Mischprills vollständig aufgeschmolzen. Nach Zugabe von 4 x 10⁻³ mol-% Tetraphenylphosphonium-Phenolat bezogen auf Bisphenol A wurde die Temperatur stufenweise auf 250°C gesteigert und entstehendes Phenol bei 100 mbar abdestilliert. Anschließend wurde das Vakuum stufenweise auf 1 mbar verbessert und die Temperatur auf 260°C erhöht. Danach wurde die Temperatur auf 300 °C erhöht und bei 0,1 mbar Vakuum 1,5 Stunden gerührt. Entstehendes Phenol wurde über die Destillationsbrücke kondensiert und abgeführt. Die gesamte Versuchsdauer ab Aufschmelzen der Mischprills betrug 3,5 h.

Als Ergebnis der durchgeführten Reaktion erhielt man im Reaktionskolben farbhelles, lösungsmittelfreies Polycarbonat, das eine relative Lösungsmittelviskosität etaᵣₑₗ=1,260 aufwies. Der YI der Probe wurde zu 2,3, die Transmission zu 88,31 % bestimmt. Das so hergestellte Polycarbonat aus festen DPC-BPA-Mischprills war in seinem Eigenschaftsprofil nicht von Polycarbonat zu unterscheiden bei dessen Herstellung die Rohstoffe DPC und BPA als getrennte Stoffe in das Verfahren eingeführt wurden.

## Patentansprüche

1. Feste Partikel, **dadurch gekennzeichnet, dass** sie 10 bis 90 Gew.-Teile einer Dihydroxyverbindung und 10 bis 90 Gew.-Teile eines Kohlensäureesters enthalten.

2. Feste Partikel, **dadurch gekennzeichnet, dass** sie 10 bis 90 Gew.-Teile Bisphenol A und 10 bis 90 Gew.-Teile Diphenylcarbonat enthalten.

3. Verfahren zur Herstellung fester Partikel nach Anspruch 1, **dadurch gekennzeichnet, dass** eine Schmelze die 10 bis 90 Gew.-Teile der Dihydroxyverbindung und 10 bis 90 Gew.-Teile des Kohlensäureesters enthält, abgekühlt wird.

4. Verfahren zur Herstellung fester Partikel nach Anspruch 2, **dadurch gekennzeichnet, dass** eine Schmelze die 10 bis 90 Gew.-Teile Bisphenol A und 10 bis 90 Gew.-Teile Diphenylcarbonat enthält, abgekühlt wird.

5. Vorrichtung zur Herstellung der festen Partikel gemäß einem der Ansprüche 1 oder 2, **dadurch gekennzeichnet, dass** die Vorrichtung zwei getrennte Zuleitungen für die Schmelze des Kohlensäureesters (1) und für die Schmelze der Dihydroxyverbindung (2) aufweist und dass diese Zuleitungen in zwei getrennte Wärmetauscher (3 und 4) münden und dass die Leitungen zum Abtransport des Kohlensäureesters und der Dihydroxyverbindung aus dem jeweiligen Wärmetauscher zur Vereinigung der beiden Stoffströme zusammengeführt werden, und dass die Vorrichtung in der Leitung, die die zusammengeführten Stoffströme aus Kohlensäureester und Dihydroxyverbindung weitertransportiert, ein Mischelement (5) und danach einen Wärmetauscher (6) aufweist und, dass die Vorrichtung einen Prillturm (8) aufweist, der mit dem vereinigten Stoffstrom aus Kohlensäureester und Dihydroxyverbindung der aus dem zuletzt genannten Wärmetauscher stammt, gespeist wird.

6. Verfahren nach Anspruch 4, wobei zur Abkühlung der Schmelze die Vorrichtung nach Anspruch 5 verwendet wird.

7. Verwendung der festen Partikel nach einem der Ansprüche 1 oder 2 zur Herstellung von Polycarbonat durch Umesterung von Kohlensäureestern mit Dihydroxyverbindungen.

8. Verfahren zur Herstellung von Polycarbonat durch Umesterung von Kohlensäureestern mit Dihydroxyverbindungen, **dadurch gekennzeichnet, dass** die festen Partikel gemäß einem der Ansprüche 1 oder 2 als Rohstoff eingesetzt werden.

## Claims

1. Solid particles, **characterised in that** they contain 10 to 90 parts by weight of a dihydroxy compound and 10 to 90 parts by weight of a carbonic acid ester.

2. Solid particles, **characterised in that** they contain 10 to 90 parts by weight of bisphenol A and 10 to 90 parts by weight of diphenyl carbonate.

3. Process for the production of solid particles according to claim 1, **characterised in that** a melt which contains 10 to 90 parts by weight of the dihydroxy compound and 10 to 90 parts by weight of the carbonic acid ester is cooled.

4. Process for the production of solid particles according to claim 2, **characterised in that** a melt which contains 10 to 90 parts by weight of bisphenol A and 10 to 90 parts by weight of diphenyl carbonate is cooled.

5. Apparatus for the production of the solid particles according to one of claims 1 or 2, **characterised in that** the apparatus has two separate feed lines for the melt of the carbonic acid ester (1) and for the melt of the dihydroxy compound (2) and that these feed lines open into two separate heat exchangers (3 and 4) and that the lines to convey the carbonic acid ester and the dihydroxy compound away from their particular heat exchangers are joined to combine the two streams of material, and that, in the line which conveys onwards the combined streams of material comprising carbonic acid ester and dihydroxy compound, the apparatus has a mixing element (5) and, thereafter, a heat exchanger (6) and that the apparatus comprises a prilling tower (8) which is fed with the combined stream of material comprising carbonic acid ester and dihydroxy compound originating from the last-stated heat exchanger.

6. Process according to claim 4, wherein the apparatus according to claim 5 is used to cool the melt.

7. Use of the solid particles according to one of claims 1 or 2 for the production of polycarbonate by transesterification of carbonic acid esters with dihydroxy compounds.

8. Process for the production of polycarbonate by transesterifying carbonic acid esters with dihydroxy compounds, **characterised in that** the solid particles according to one of claims 1 or 2 are used as the raw material.

## Revendications

1. Particules solides, **caractérisées en ce qu'**elles contiennent 10 à 90 parties en poids d'un composé dihydroxylé et 10 à 90 parties en poids d'un ester d'acide carbonique.

2. Particules solides, **caractérisées en ce qu'**elles contiennent 10 à 90 parties en poids de bisphénol A et 10 à 90 parties en poids de diphénylcarbonate.

3. Procédé de production de particules solides selon la revendication 1, **caractérisé en ce qu'**une masse fondue qui contient 10 à 90 parties en poids du composé dihydroxylé et 10 à 90 parties en poids de l'ester d'acide carbonique est refroidie.

4. Procédé de production de particules solides selon la revendication 2, **caractérisé en ce qu'**une masse fondue qui contient 10 à 90 parties en poids de bisphénol A et 10 à 90 parties en poids de diphénylcarbonate est refroidie.

5. Dispositif pour la production des particules solides selon une des revendications 1 ou 2, **caractérisé en ce qu'**il présente deux conduites d'alimentation séparées pour la masse fondue de l'ester d'acide carbonique (1) et pour la masse fondue du composé dihydroxylé (2), et que ces conduites d'alimentation débouchent dans deux échangeurs de chaleur séparés (3 et 4), et que les conduites d'évacuation de l'ester d'acide carbonique et du composé dihydroxylé hors des échangeurs de chaleur respectifs sont abouchées pour réunir les deux flux de matières, et que le dispositif, dans la conduite qui transporte plus loin les flux de matières réunis, présente un élément mélangeur (5) et ensuite un échangeur de chaleur (6), et que le dispositif présente une tour à priller (8) qui est alimentée par les flux réunis d'ester d'acide carbonique et de composé dihydroxylé provenant de l'échangeur de chaleur cité en dernier lieu.

6. Procédé selon la revendication 4, dans lequel le dispositif selon la revendication 5 est utilisé pour refroidir la masse fondue.

7. Utilisation des particules solides selon une des revendications 1 ou 2 pour la production de polycarbonate par transestérification d'esters d'acide carbonique avec des composés dihydroxylés.

8. Procédé de production de polycarbonate par transestérification d'esters d'acide carbonique avec des composés dihydroxylés, **caractérisé en ce que** les particules solides sont mise en oeuvre comme matière de départ selon une des revendications 1 ou 2.
